(19) Europäisches Patentamt / European Patent Office / Office européen des brevets

(11) **EP 3 826 169 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **19000531.4**

(22) Anmeldetag: **25.11.2019**

(51) Internationale Patentklassifikation (IPC):
**H02P 21/18** (2016.01)

(52) Gemeinsame Patentklassifikation (CPC):
**H02P 21/18**

(54) **VERFAHREN UND VORRICHTUNG ZUR REGELUNG EINER SYNCHRONMASCHINE OHNE LAGEGEBER MITTELS EINDEUTIGER ZUORDNUNG DER FLUSSVERKETTUNG ZUR ROTORLAGE**

METHOD AND DEVICE FOR CONTROLLING A SYNCHRONOUS MACHINE WITHOUT A POSITION SENSOR BY MEANS OF A UNIQUE ALLOCATION OF THE FLOW LINKAGE TO THE ROTOR POSITION

PROCÉDÉ ET DISPOSITIF DE RÉGULATION D'UNE MACHINE SYNCHRONE SANS CAPTEUR DE POSITION AU MOYEN D'UNE ATTRIBUTION UNIQUE DE COUPLAGE DE FLUX À L'EMPLACEMENT DU ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.05.2021 Patentblatt 2021/21**

(73) Patentinhaber: **KOSTAL Drives Technology GmbH 58513 Lüdenscheid (DE)**

(72) Erfinder:
• **Landsmann, Peter 80807 München (DE)**
• **Kühl, Sascha 81671 München (DE)**
• **Paulus, Dirk 81669 München (DE)**

(74) Vertreter: **Kerkmann, Detlef Leopold Kostal GmbH & Co. KG An der Bellmerei 10 58513 Lüdenscheid (DE)**

(56) Entgegenhaltungen:
• XU WEI ET AL: "Improved Nonlinear Flux Observer-Based Second-Order SOIFO for PMSM Sensorless Control", IEEE TRANSACTIONS ON POWER ELECTRONICS, INSTITUTE OF ELECTRICAL AND ELECTRONICS ENGINEERS, USA, Bd. 34, Nr. 1, 1. Januar 2019 (2019-01-01) , - 1. Januar 2019 (2019-01-01), Seiten 565-579, XP011697146, ISSN: 0885-8993, DOI: 10.1109/TPEL.2018.2822769 [gefunden am 2018-11-27]

EP 3 826 169 B1

**Beschreibung**

**1 Stand der Technik**

Verfahren, die eine effiziente und performante (beispielsweise feldorientierte) Regelung einer Synchronmaschine (Motor und/oder Generator) ohne Lagegeber ermöglichen (häufig als "geberlose" oder "sensorlose" Regelung bezeichnet) werden in 2 grobe Klassen unterteilt:

1. Grundwellenverfahren [1] [2] [3] [4] [5] [6] [7] [8] [9] [10] [11] [12] werten die unter Bewegung induzierte Spannung aus, liefern bei mittleren und hohen Drehzahlen sehr gute Signal-Eigenschaften, aber versagen im unteren Drehzahlbereich, insbesondere bei Stillstand.

2. Anisotropie-basierte Verfahren [13] [14] [15] werten die Lageabhängigkeit der Induktivität der Maschine aus, wozu keine Drehzahl notwendig ist, aber weisen generell schlechtere Signal-Eigenschaften auf.

Eine geberlose Regelung im gesamten Drehzahlbereich wird deshalb häufig durch eine Kombination beider Verfahrensklassen realisiert - sogenannte hybride Geberlosverfahren [16] [17] [18] [19] [20] [21] [22] [23]. Diese Erfindung betrifft die Klasse der Grundwellenverfahren, unabhängig davon, ob das Grundwellenverfahren separat oder im Hybridbetrieb eingesetzt wird.

Innerhalb der Grundwellenverfahren kann zwischen den Unterklassen a) EMF-basierter (Elektromotorische Kraft) Verfahren, wie z.B. mittels direkter bzw. gefilterter EMF-Auswertung [4] [6] [20] [8] [20], Luenberger-Beobachter [16] [18], extended Kalman-Filter [3] oder Sliding-Mode-Beobachter [2]; und b) Fluss-basierter Verfahren [1] [5] [9] [10] [11] [12] [17] [19] [21] [22] [23] [24] unterschieden werden. Diese Erfindung bezieht sich auf die Unterklasse Fluss-basierter Grundwellenverfahren. Dabei wird der Begriff Fluss in dieser Beschreibung als Kurzbezeichnung für die magnetische Flussverkettung verwendet.

In Fluss-basierten Grundwellenverfahren wird zunächst der Fluss aus dem Integral der Spannung (minus ohm'schem Anteil) über die Zeit t gewonnen

$$\hat{\psi}_s^s = \int \left( u_s^s - R_s i_s^s \right) dt, \qquad (1)$$

worin $u_s^s$ die Spannung der Statorwicklung (Subskript s) dargestellt in Stator-festen Koordinaten (Superskript s), $R_s$ der Widerstand der Statorwicklung und $i_s^s$ der Strom durch die Statorwicklung ist und das Dach ^ angibt, dass die Größe geschätzt ist.

Die offene Integration in (1) unterliegt einem Driftproblem (durch Messfehler, wie z.B. Gleichanteile in $i_s^s$), zu dessen Kompensation das Integral um einen zusätzlichen Term $u_c$ erweitert wird

$$\hat{\psi}_s^s = \int \left( u_s^s - R_s i_s^s + u_c^s \right) dt, \qquad (2)$$

welcher von der Abweichung des integrierten Flusses $\hat{\psi}_s^s$ von einem Referenzfluss $\psi_{ref}^s$ abhängt

$$u_c^s = C\left( \psi_{ref}^s - \hat{\psi}_s^s \right). \qquad (3)$$

Dabei beinhaltet die Funktion C i.d.R. ein herkömmliches Regelgesetz (C für Controller), in der einfachsten Form einen P- (z.B. in [5] [17] [19]) oder PI-Regler (z.B. in [9] [11] [21]). Das Referenzfluss-Signal $\psi_{ref}^s$ kann durch verschiedene Prinzipien generiert werden, in der einfachsten Form als Nullvektor $\psi_{ref}^s = 0$ (z.B in [5] [10] [23]) oder besser mittels des Quotienten aus interner Spannung und geschätzter Drehzahl, wie beispielsweise

$$\psi_{ref}^s = -J\frac{(u_s^s - R_s i_s^s)}{\omega}, \tag{4}$$

worin die 90°-Drehmatrix $J$ einen Vektor bei Multiplikation um 90° rotiert

$$J = \begin{bmatrix} 0 & -1 \\ 1 & 0 \end{bmatrix}. \tag{5}$$

Es gibt aber auch Varianten, wo die geschätzte Rotorlageinformation zur Referenzflussbildung mit herangezogen wird [9] [21] [22], oder auch Varianten, die ein eigenes Prinzip zur Referenzflussbildung [10] [11] bzw. zur Stabilisierung [1] [24] wählen.

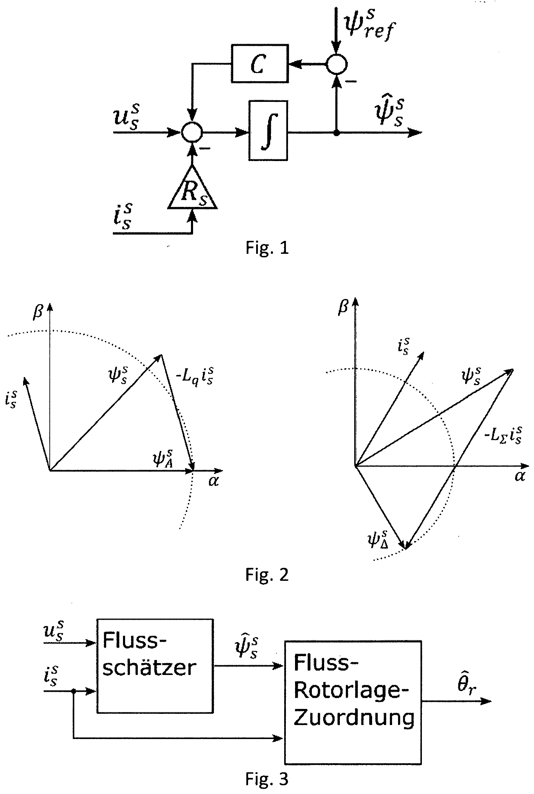

In Summe ergibt sich aus den Gleichungen (1)-(3) die übliche Struktur eines Flussschätzers mit Driftkompensation, welche in Fig. 1 dargestellt ist, wobei die Generierung des Referenzfluss $\psi_{ref}^s$ wegen der vielen möglichen Alternativen nicht abgebildet ist.

Nach der Berechnung des aktuell geschätzten Flusswerts $\hat{\psi}_s^s$ wird aus diesem unter Berücksichtung des aktuell gemessenen Stroms $i_s^s$ nach einer bestimmten Vorschrift ein geschätzter Rotorlagewert $\hat{\theta}_r$ berechnet, der das Ausgangssignal des Geberlosverfahrens bildet und zu den jeweiligen Reglern rückgeführt wird (zum Stromregler für die dq-Transformation, Ableitung zum Drehzahlregler). Für diese Berechnung von $\hat{\theta}_r$ wird in der Literatur zusammengefasst üblicherweise ein skalierter Stromvektor $L_x i_s^s$ (z.B. in [1] [5] mit Null skaliert d.h. direkte Flussauswertung, oder in [9] [22] mit der q-Induktivität $L_q$ skaliert, oder in [11] mit der mittleren Induktivität $L_\Sigma$ skaliert, oder in [21] [23] mit einer allgemeinen Induktivität $L_s$ skaliert, oder in [10] mittels Rückführung von $\hat{\theta}_r$ gesondert mit $L_d$ und $L_q$ skaliert) vom geschätzten Flusswerts $\hat{\psi}_s^s$ abgezogen und dem resultierenden Differenz-Flussvektor ein Rotorlagewert zugeordnet.

Im Folgenden wird diese Zuordnung für zwei beispielhafte Ansätze ActiveFlux [9] [22] und FundamentalSaliency [11] im Detail erläutert, um später die Schwachstelle dieser in der Literatur üblichen Herangehensweise begründen zu können.

Im ActiveFlux-Ansatz wird der sog. ActiveFlux-Vektor $\psi_A^s$ berechnet, der bei jedem Maschinentyp per Definition immer mit der d-Achse ausgerichtet ist und damit zur direkten Berechnung der Rotorlage herangezogen werden kann

$$\hat{\theta}_r = arg(\hat{\psi}_A^s). \tag{6}$$

Dabei ergibt sich der geschätzte ActiveFlux-Vektor $\hat{\psi}_A^s$, indem das Produkt aus absoluter q-Induktivität $L_q$ und Strom $i_s^s$ vom geschätzten Fluss $\hat{\psi}_s^s$ subtrahiert wird

$$\hat{\psi}_A^s = \hat{\psi}_s^s - L_q i_s^s \tag{7}$$

$$\psi_A^r = \begin{bmatrix} \psi_{pm} + (L_d - L_q)i_d \\ 0 \end{bmatrix}. \tag{8}$$

mit Superskript $r$ für Darstellung in dq-Rotorkoordinaten. Dabei gestaltet aich die Subtraktion (25) unabhängig vom gewählten Koordinatensystem (Superskript s, r, oder beliebig) immer gleich. Ferner sind absolute Induktivitäten $L_d$ oder $L_q$ allgernein als Quotient aus Fluss und Storm definiert

$$L_d = \frac{\psi_d}{i_d} \tag{9}$$

$$L_q = \frac{\psi_q}{i_q} \qquad\qquad (10)$$

und gelten bei nichtlinearem Verlauf des Flusses über dem Strom (magnetische Sättigung) jeweils immer für einen Strom-Betriebspunkt $i_s^r$ .

Die Berechnung des ActiveFlux-Vektors (7) und die aus (8) resultierend Winkelabhängigkeit, die eine Winkelberechnung nach (6) ermöglicht, ist in Fig. 2 links als Vektordiagramm für Rotorlage $\theta_r = 0$ grafisch veranschaulicht.

Laut [9] ist der ActiveFlux-Ansatz nicht nur für Permanentmanget-Synchronmaschinen (PMSM), sondern gleichermaßen auch zur geberlosen Regelung von Reluktanz-Synchronmaschinen (RSM) anwendbar, wobei (8) ergibt, dass ohne PM-Fluss $\psi_{pm} = 0$ der Betrag des geschätzten ActiveFlux-Vektors $\hat{\psi}_A^s$ und damit der Signalgehalt einer solchen Rotorlage-Zuordnung ohne d-Strom $i_d = 0$ verschwindet (Strombetriebspunkte auf der q-Achse wären nicht möglich).

Weil [11] eine solche Einschränkung nicht impliziert, wird dieser sog. FundamentalSaliency-Ansatz als zweite Möglichkeit zur Berechnung des Rotorlagewerts $\hat{\theta}_r$ für die RSM zitiert. Hier wird anstatt der q-Induktivität $L_q$ die mittlere Induktivität $L_\Sigma = \frac{L_d + L_q}{2}$ mit dem Strom $i_s^s$ multipliziert vom geschätzten Fluss $: abgezogen, woraus sich der sog. FundamtenalSaliency-Vektor $\hat{\psi}_\Delta^s$ ergibt $\psi_\Delta^s$

$$\hat{\psi}_\Delta^s = \hat{\psi}_s^s - L_\Sigma i_s^s \qquad\qquad (11)$$

$$\psi_\Delta^r = \frac{(L_d - L_q)}{2}\begin{bmatrix} i_d \\ -i_q \end{bmatrix}. \qquad\qquad (12)$$

Dem geschätzten Vektor $\hat{\psi}_\Delta^s$ kann die Rotorlage wie folgt zugeordnet werden

$$\hat{\theta}_r = \frac{1}{2} arg \left( \begin{bmatrix} i_\alpha \psi_{\Delta\alpha} - i_\beta \psi_{\Delta\beta} \\ i_\alpha \psi_{\Delta\beta} + i_\beta \psi_{\Delta\alpha} \end{bmatrix} \right), \qquad\qquad (13)$$

wobei aus (12) und (13) ersichtlich ist, dass hier für ausreichend Signalgehalt lediglich ein Mindestmaß an Strombetrag erforderlich ist und damit auch Strom-Betriebspunkte auf der q-Achse möglich sind.

Die Berechnung des FundamentalSaliency-Vektors (11) und die aus (12) resultierend Winkelabhängigkeit, die eine Winkelberechnung nach (13) ermöglicht, ist in Fig. 2 rechts als Vektordiagramm für Rotorlage $\theta_r = 0$ grafisch veranschaulicht.

## 2 Problembeschreibung

Es folgt eine allgemeine Erläuterung, auch betreffend fakultative Ausgestaltungen der Erfindung. Dabei zeigen:

Fig. 1    Blockschaltbild eines Flussschätzers mit Driftkompensation

Fig. 2    Zeigerdiagramme des ActiveFlux- (links) und des FundamentalSaliency-Verfahrens (rechts) in Statorkoordinaten für Rotorlage $\theta_r = 0$, mit vom jeweiligen Verfahren angenommenem Verlauf der Vektoren $\psi_A^s$ bzw. $\psi_\Delta^s$ über der Rotordrehung $\theta_r \neq 0$ (gepunkte Kreise).

Fig. 3    Blockschaltbild des 2-stufigen Aufbaus Fluss-basierter Grundwellenverfahren

Fig. 4    Links: Angenommene und tatsächliche Bewegung des ActiveFlux-Vektors bei einer stark sättigenden PMSM für Nullstrom (gepunktet), Nennstrom (gestrichelt), und 3-fach Nennstrom (voll). Rechts: Resultierende Stabilitäts-Eigenschaften des ActiveFlux-Ansatzes für die genannten Stromwerte.

Fig. 5    Links: Angenommene und tatsächliche Bewegung des FundamentalSaliency-Vektors bei einer stark sättigenden RSM für ¼ Nennstrom (gepunktet), Nennstrom (gestrichelt), und 2,75-fach Nennstrom (voll). Rechts: Resultierende Stabilitäts-Eigenschaften des FundamtentalSaliency-Ansatzes für die genannten Stromwerte.

Fig. 6   SFC-Flussverlauf in Statorkoordinaten ($\alpha, \beta$) über einer elektrischen Rotordrehung für verschiedene reine $\alpha$-Ströme ($i_\beta$ = 0); bzw. Stromwinkel-unabhängiger Flussverlauf in Stromkoordinaten ($x,y$) für verschiedene Strombeträge über einer elektrischen Rotordrehung für eine stark sättigenden PMSM; Nullstrom (gepunktet), Nennstrom (gestrichelt) und 3-fach Nennstrom (voll).

Fig. 7   Gemessener Flussvektor in Stromkoordinaten $\hat{\psi}_s^i$ (Pfeil) gegenübergestellt der Strombetragsabhängigen Interpolation (gestrichpunktete Trajektorie) zwischen zwei hinterlegten SFC-Verläufen (volle Trajektorien).

Fig. 8   Iterative Stromwinkel-Stützstellensuche auf der Interpolierten Trajektorie mit Suchvergangenheit (gepunktet) und Suchergebnis (lang gestrichelt).

Fig. 9   Fein-Zuordnung des Winkelwerts mittels Projektion des gemessenen Flussvektors $\hat{\psi}_s^i$ auf die durch die zwei nächsten Punkte beschriebenen Gerade.

Fig. 10   Winkelstützstellen-Suche im Bereich negativer Stromwinkel mittels Spiegelung der Daten positiver Strom-winkel $\theta_{ir}$.

Fig. 11   Temperaturnachführung durch Skalierung des gemessenen Flussvektors $\hat{\psi}_s^i$ ausgehend vom Kollapszentrum (Kreis auf der x-Achse) hin zum skalierten Flussvektor $\hat{\psi}_{sh}^i$, wobei die Skalierung ggf. abhängig von der orthogonalen Projektionskomponente (orthogonale Linie auf der Trajektorie) erfolgt.

Fig. 12   Experimentelle Ergebnisse des vorgestellten Verfahrens (volle Graphen) gegenüber dem ActiveFlux-Verfahren (gepunktete Graphen) am Beispiel der geberlos drehzahlgeregelten PMSM während einer Last-Rampe; oben: gemessene Drehzahl in rad/s (elektrisch); mittig: gemessener Strombetrag bezogen auf Nennstrom; unten: Lage-Schätzfehler in elektrischen Grad; alle Graphen aufgetragen über der Zeit in Sekunden.

Fig. 13   Experimentelle Ergebnisse des vorgestellten Verfahrens (volle Graphen) gegenüber dem FundamentalSaliency-Verfahren (gepunktete Graphen) am Beispiel der geberlos drehzahlgeregelten RSM während einer Last-Rampe; oben: gemessene Drehzahl in rad/s (elektrisch); mittig: gemessener Strombetrag bezogen auf Nennstrom; unten: LageSchätzfehler in elektrischen Grad; alle Graphen aufgetragen über der Zeit in Sekunden.

In einer bestimmten Betrachtungsweise sind Fluss-basierte Grundwellenverfahren generell aus 2 Stufen aufgebaut, die wie in Fig. 3 dargestellt, abgetrennt werden können. Die erste Stufe ist der Flussschätzer, dessen Aufgabe es ist, den aktuellen Wert des Flussvektors $\psi_s^s$, der selbst nicht direkt messbar ist, aus den zeitlichen Verläufen von Spannung und Strom kontinuierlich zu berechnen und ihn der zweiten Stufe zur Verfügung zu stellen. Die zweite Stufe ordnet dem geschätzten Flussvektor $\hat{\psi}_s^s$ unter Berücksichtigung des aktuell gemessen Stroms $i_s^s$ einen Rotorlagewert zu und umfasst damit genau den Themenbereich der Neuerung des vorgestellten Verfahrens. Diese Schnittstellen der zweiten Stufe Rotorlagezuordnung und damit die klare Abgrenzung von der ersten Stufe Flussschätzer ist in Fig. 3 dargestellt.

Die zweite Stufe Fluss-basierter Grundwellenverfahren, d.h. die Fluss-Rotorlage-Zuordnung kann unter Last zu Uneindeutigkeit und damit zur Instabilität der Verfahren führen. Die Ursache hierfür ist, dass herkömmliche Verfahren zur Fluss-Rotorlage-Zuordnung die Annahme implizieren, dass die Induktivitätswerte z.B. $L_q$ (bei ActiveFlux), $L_\Sigma$ (bei FundamentalSaliency) oder andere (bei anderen Fluss-basieren Verfahren, siehe Abschnitt 1), die im jeweiligen Rotorlage-Zuordnungsgesetz verwendet werden, zwar lediglich für den Sollbetriebspunkt (z.B. MTPA) ermittelt wurden, aber dennoch auch abseits dieses Punktes gelten. Für kleine Ströme trifft diese Annahme meist hinreichend gut zu, sodass bei Stromeinprägung in einem falschen Winkel (z.B. aufgrund eines Lage-Schätzfehlers) dennoch näherungsweise die korrekte Rotorlage berechnet wird. Bei großen Strömen jedoch entstehen bei bestimmten Maschinentypen mit nichtli-nearem Flussverlauf $\psi_s^r(i_s^r)$ bei Stromwinkeln abseits des Sollpunktes größere Schätzfehler (Differenzen zwischen geschätzter und tatsächlicher Rotorlage). Dies ist insbesondere dann kritisch, wenn der resultierende Lageschätzfehler größer ist, als der verursachende Fehlwinkel der Stromeinprägung, denn dann wird der Schätzfehler mit jedem Zyklus größer, was die Schätz-Regel-Schleife instabil werden lässt. Ähnliche Zusammenhänge sind aus dem Bereich der Anisotropie-basierten Verfahren bekannt [25], wo sie ebenfalls zur Instabilität der Schätz-Regel-Schleife führen. Im Bereich der Grundwellenverfahren ist eine solche Analyse und Schlussfolgerung noch nicht vorhanden und wird im Folgenden zunächst genauer erläutert:

Fig. 2 zeigt die vektoriellen Zusammenhänge des ActiveFlux Ansatzes für Rotorlage $\theta_r$ = 0, wo der Strom $i_s^s = i_s^r$ genau im Sollarbeitspunkt (z.B. MTPA = Maximum Torque Per Ampere-Richtung) eingeregelt ist. Für diesen Stromwinkel $\angle i_s^r$ wurde die Induktivität $L_q(|i_s^r|)$ zuvor vermessen (meist abhängig vom Strombetrag), sodass nun genau der richtige Wert $L_q$ zur Skalierung des Vektors $L_q i_s^s$ genutzt wird und die Subtraktion (7)(25) einen ActiveFlux $\psi_A^r$ genau in $\alpha$-Richtung berechnet (wo er sich gemäß $\theta_r = 0$ und (8) auch befindet). Die Annahme der Literatur zum ActiveFlux-Konzept ist nun, dass sich bei einer Rotordrehung der ActiveFlux $\psi_A^s$, wie der gepunktete Kreis andeutet, kreisförmig um den Koordinatenursprung bewegen sollte und dass seine Orientierung folglich der Rotorlage $\theta_r$ gleicht, sodass der Rotorlage-Schätzwert $\hat{\theta}_r$ mittels (6) berechnet werden kann. Dies setzt aber voraus, dass der zur Subtraktion (7) herangezogene Wert $L_q(|i_s^r|)$ auch tatsächlich in der Maschine wirksam ist, was nur dann zutreffen kann, wenn entweder

a) der Wert $L_q(|i_s^r|)$ keinerlei Abhängigkeit vom Stromwinkel in Rotorkoordinaten $\angle i_s^r$ hat (bei Sättigung nicht zutreffend), oder alternativ wenn

b) der Stromwinkel in tatsächlichen Rotorkoordinaten $\angle i_s^r$ sich genau im Sollarbeitspunkt befindet, also der Strom immer fest mit dem Rotor umläuft

Letzteres b) ist eine in der bisherigen Literatur zur geberlosen Regelung übliche (fehlerhafte) Annahme, die im Folgenden als "in Rotorkoordinaten festgehaltener Strom" (Rotor-frame Fixed Current, oder kurz RFC, $i_s^r = const$ ) Bedingung bezeichnet wird. Weil im geberlosen Betrieb die Rotorlage nicht per se bekannt ist (insb. bei Rotorlage-Schätzfehlern) und der Stromsollwert in geschätzten Koordinaten eingeregelt wird, kann der Stromwinkel in tatsächlichen Rotorkoordinaten $\angle i_s^r$ durchaus deutlich vom Sollarbeitspunkt abweichen. Gegen solche Abweichungen und die einhergehenden Sättigungserscheinungen (Änderung des wirksamen $L_q$) muss eine Vorschrift zur Fluss-Rotorlage-Zuordnung robust sein, um bei einer bestimmten Last $|i_s^r|$ die Stabilität der geschlossenen Schätz-Regel-Schleife zu gewährleisten.

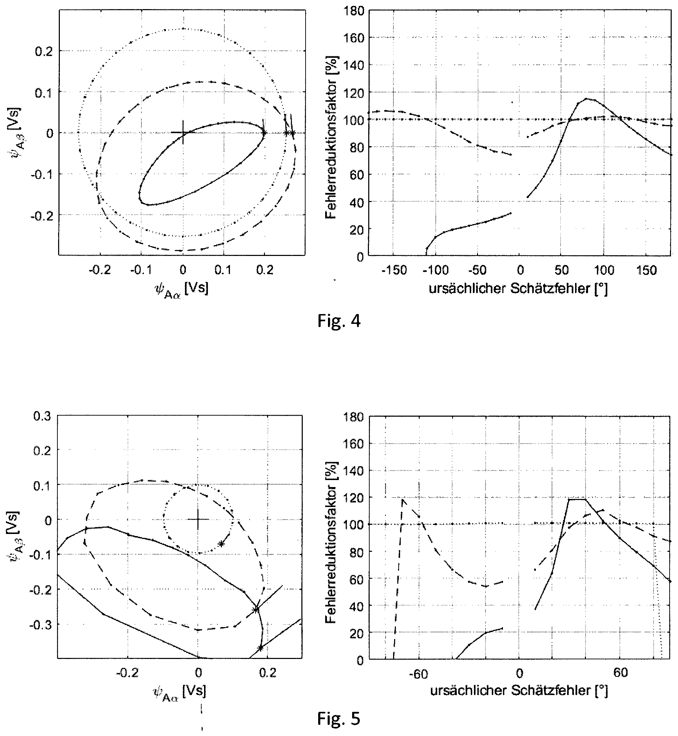

Fig. 4 zeigt am Beispiel einer Permanentmagnet Synchronmaschine (PMSM) mit starker magnetischer Sättigung, dass eine solche Robustheit dem ActiveFlux-Ansatz bei hohen Strömen verloren geht. Dazu ist auf der linken Seite der ActiveFlux $\psi_A^s$ für bestimmte Situationen aufgetragen, in denen der Strom immer in Statorkoordinaten $i_s^s$ im Sollpunkt verbleibt (so als bliebe die Lageschätzung $\hat{\theta}_r = 0$). Die Sterne markieren für die verschiedene Strömbeträge $|i_s^r| = 0 \dots 3 i_N$ jeweils den "idealen" ActiveFlux $\psi_A^s$, der sich dann einstellt, wenn geschätzte und tatsächliche Rotorlage übereinstimmen $\hat{\theta}_r = \theta_r = 0$ und der Strom folglich auch in tatsächlichen Rotorkoordinaten auf seinem Sollpunkt geregelt wird. In Übereinstimmung mit Fig. 2 befinden sich die Sterne alle auf der $\alpha$-Achse. Würde nun der Rotor um 10° verdreht $\theta_r = 10°$, so würde die ActiveFlux(AF)-Annahme ebenfalls eine 10°-Rotation der Sterne um den Koordinatenursprung erwarten, was durch die aus den Sternen herauslaufenden Geradenstücken verbildlicht ist. Weil sich hierbei aber der Stromwinkel in Rotorkoordinaten $\angle i_s^r$ und damit der Sättigungszustand ändert, nimmt der tatsächliche Verlauf des ActiveFlux $\psi_A^s$ einen verschiedenen Verlauf, wie im linken Plot von Fig. 4 dargestellt ist: Die kreisförmigen/ovalen Trajektorien zeigen den tatsächlichen Verlauf des nach (7) berechneten ActiveFlux $\psi_A^s$ über eine elektrische Rotordrehung, wobei die Punkte jeweils 5° Rotorlagedifferenz repräsentieren

$$\theta_r = n5°. \tag{14}$$

Der entscheide Zusammenhang für das Entstehen dieser essenziellen Trajektorien (im Unterschied zur Kreisannahme in Fig. 2) ist, dass der Strom nicht automatisch mit der (im Betrieb unbekannten) Rotorlage mitdreht (RFC, $i_s^r = const$ ), sondern in Statorkoordinaten $i_s^s$ unverändert bleibt. Unter dieser (in der Literatur unüblichen) sog. SFC-Bedingung (Stator-frame Fixed Current, in Statorkoordinaten festgehaltener Strom, $i_s^s = const$ ) ist der reine Einfluss der Rotorbewegung auf den Fluss $\psi_s^s$, also auch auf den ActiveFlux $\psi_A^s$ isoliert zu erkennen, d.h. nicht vermischt mit einer gleichzeitigen Veränderung des Stroms.

Die gepunktete SFC-Trajektorie (Nullstrom) im linken Plot von Fig. 4 verläuft genau kreisförmig um den Koordinatenursprung und das 10°-Geradenstück (AF-Annahme) mündet genau im zweiten 5° Punkt der SFC-Trajektorie, was bedeutet, dass für Nullstrom der ActiveFlux-Ansatz perfekte Gültigkeit hat (denn für Nullstrom gilt SRC=RFC). Bei der gestrichelten SFC-Trajektorie (Nennstrom) zeigt sich bereits ein Betrags- und Richtungsunterschied zwischen ActiveFlux-Annahme und tatsächlichem SFC-ActiveFlux-Verlauf und auch die zentrische Kreisform ist nicht mehr gegeben. Der Richtungsunterschied führt vor allem zu suboptimalem Signalgehalt und zu erhöhter Störempfindlichkeit der AF-Lagezuordnung. Der Betragsunterschied und die Abweichung von der Kreisform führen vor allem dazu, dass ursächliche Schätzfehler und die einhergehende Stromeinprägung abseits des Sollpunktes zu einem resultierenden Schätzfehler der AF-Lagezuordnung führen. So zeigt der rechte Plot in Fig. 4 in jeweils gleicher Farbe wie links, um welchen Faktor ein ursächlicher Schätzfehler im ActiveFlux-Rechenergebnis verringert sein wird, was im Falle der gestrichelten Kurven mit ca. 80% noch nicht kritisch ist.

Bei der vollen SFC-Trajektorie (3-fach Nennstrom) hingegen gibt es sehr starke Unterschiede zwischen Geradenstück (AF-Annahme) und tatsächlichem SFC-ActiveFlux-Verlauf, mit der Besonderheit, dass die SFC-Trajektorie den Koordinatenursprung nicht mehr umschließt und der ActiveFlux-Ansatz folglich eine vollständige Rotordrehung (relativ zum Strom) nicht mehr nachvollziehen kann. So zeigt die volle Kurve auf der rechten Seite, dass auch kleine Schätzfehler nur kaum noch reduziert werden (<30% Reduktionsfaktor) und größere Schätzfehler sogar in den Bereich negativer Reduktionsfaktoren (d.h. Fehlerverstärkung) laufen - beides hinsichtlich Stabilität kritisch. Auch in der Praxis ist diese PMSM bei 3-fach Nennstrom mit dem ActiveFlux-Ansatz nicht regelbar.

Fig. 5 zeigt am Beispiel einer RSM mit starker magnetischer Sättigung, wie die gleichen Zusammenhänge auch für den FundamentalSaliency(FS)-Ansatz gelten. Auf der linken Seite sind die "idealen" Punkte wieder durch jeweils einen Stern und die 10°-FS-Annahme durch jeweils ein Geradenstück markiert, welche aufgrund der Auswertegleichungen des FS-Ansatz (13) anders angeordnet sind als in Fig. 4. Für kleine Ströme (1/4 Nennstrom) liefert auch der FS-Ansatz eine sehr gute Fehlerreduktion für alle Stromwinkel/ursächlichen Winkelfehler. Mit zunehmendem Strom wird jedoch auf der linken Seite ersichtlich, dass die tatsächlichen SFC-FS-Trajektorien nicht wie bei FS angenommen gleichmäßig, zentrisch um einen Koordinatenursprung laufen, sondern dass bereits nach wenigen Punkten (positive Drehrichtung) die tatsächliche FS-Trajektorie in ihrer Drehrichtung rückläufig wird und den Koordinatenursprung nicht umschließt. Dies führt auf der rechten Seite von Fig. 5 ebenfalls dazu, dass die FS-Lagezuordnung bei entsprechenden ursächlichen Schätzfehlern in den Bereich negativer Fehler-Reduktionsfaktoren läuft und folglich instabil wird. Auch in der Praxis ist diese RSM bei 2,75-fach Nennstrom mit dem FS-Ansatz nicht stabil regelbar.

Ein zentraler Bestandteil dieser Erfindung ist somit die allgemeine Schlussfolgerung, dass eine jede Fluss-Rotorlagezuordnung, deren Parameter nur unter der RFC-Bedingung gültig sind, aufgrund der magnetischen Sättigung der zu betreibenden Maschine oberhalb eines bestimmten Strombetrages zur Instabilität der Schätz-Regel-Schleife führen kann. Weil EMF-Verfahren der Literatur die gleichen RFC-Parameter und damit mit der gleichen unter Sättigung nicht zutreffenden Annahmen verwenden, kann diese Schlussfolgerung auch auf EMF-basierte Verfahren übertragen und damit allgemein davon ausgegangen werden, dass sämtliche Grundwellenverfahren der Literatur dem oben beschriebenen Stabilitätsproblem unterliegen, das bei bestimmten Maschinentypen mit ausgeprägter magnetischer Sättigung oder bestimmten Anwendungen mit hoher magnetischer Auslastung (z.B. wassergekühlte Maschinen im Automobil-Antriebsstrang) kritisch werden kann.

Die Veröffentlichung "Improved Nonlinear Flux Observer-Based Second-Order SOIFO for PMSM Sensorless Control" von Wei Xu et al., IEEE Transactions on Power Electronics, Institute of Electrical and Electronics Engineers, USA, Bd. 34, Nr. 1, 1. JAnuar 2019, Seiten 565 - 579, XP011697146 offenbart ein Flussschätzverfahren, das ein Rotorlageschätzverfahren für eine Synchronmaschine mit Permanentmagneten umfasst. Dieses Verfahrens beschreibt konkret einen neuen Ansatz zur Stabilisierung des üblichen Driftproblems der Spannungs-Integration für die Gewinnung des Flussverkettungs-Signals. Dabei wird ein Filter zweiter Ordnung anstatt der offenen Integration (welche physikalisch ideal wäre) eingesetzt. Dies betrifft bezogen auf die vorliegende Erfindung den Verfahrensteil "Flussschätzer", dessen Vorhandensein hierfür bereits vorausgesetzt wurde. Die zur Bildung eines vollständigen Geberlosverfahrens weiterhin erforderliche Zuordnung der Flussverkettung zur Rotorlage wird in dieser Veröffentlichung lediglich in einfachst-möglicher Form gemäß der eingangs beschriebenen Gleichungen (3) und (4) umgesetzt: Unter Annahme einer konstanten Induktivität $L_s$ wird der induktive Anteil vom integrierten Fluss subtrahiert (3) und die Ausrichtung des resultierenden Vektors $\psi_r$ als Rotorlagesignal $\theta_e = \arg(\psi_r)$ herangezogen. Diese Schritte entsprechen genau den Gleichungen (6)-(8) aus dem Abschnitt "Stand der Technik" der vorliegenden Anmeldung und unterliegen folglich ebenfalls den in diesem Abschnitt "Problembeschreibung" erläuterten technischen Problemen: Instabilität des geschlossenen geberlosen Regelkreises oberhalb bestimmter Stromwerte und folglich Lastbeschränkung des Antriebs.

**3 Lösungsansatz**

Die Erfindung ist in den unabhängigen Ansprüchen festgelegt. Demnach ist die Grundidee des vorgestellten Verfahrens, welche das zuvor erläuterte Stabilitätsproblem überwindet, dass als Schlüsselinformation zur Lagezuordnung genau der Verlauf des Flussvektors über Rotordrehung herangezogen wird, wie er sich ergibt, wenn zeitgleich (während der Rotordrehung) der Strom in Statorkoordinaten unverändert bleibt (SFC-Bedingung, $i_s^s = const$ .).

$$\psi_1^s(\theta_r) = \psi_s^s(i_1^s, \theta_r) \tag{15}$$

$$= T(\theta_r)\psi_s^r(T(-\theta_r)i_1^s) \tag{16}$$

$$T(\theta) = \begin{bmatrix} cos\,\theta & -sin\,\theta \\ sin\,\theta & cos\,\theta \end{bmatrix} \tag{17}$$

wobei $\psi_1^s(\theta_r)$ der Verlauf des Flussvektors $\psi_s^s$ über der Rotordrehung ist, der sich einstellt, wenn der konstante Stromvektor $i_s^s = i_1^s$ eingeprägt wird. Wie (16) zeigt, kann ein solcher SFC-Verlauf (15) unter Verwendung zweier Transformationen (17)(25) aus einer herkömmlichen rotorfesten Flusskarte $\psi_s^r(i_s^r)$ berechnet werden.

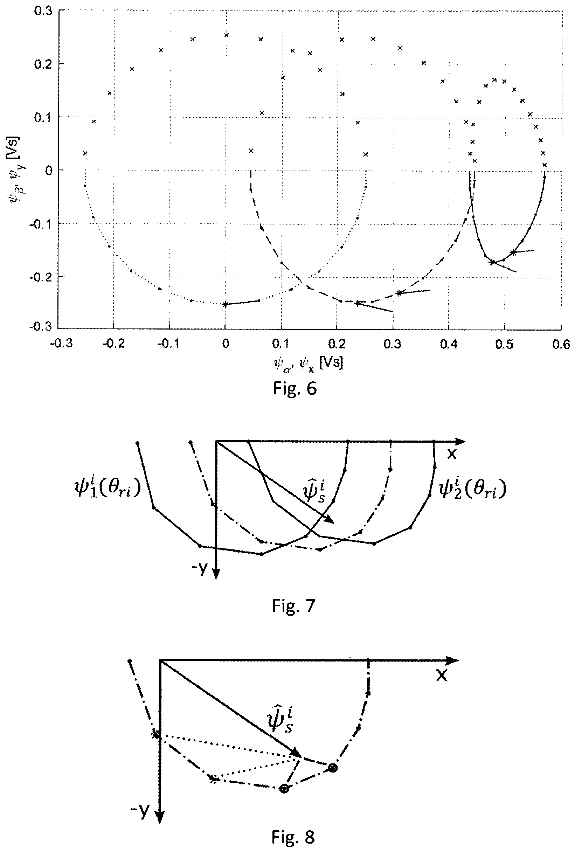

In Fig. 6 sind drei solche SFC-Verläufe $\psi_1^s(\theta_r)$, $\psi_2^s(\theta_r)$ und $\psi_3^s(\theta_r)$ für drei verschiedene reine α-Ströme $i_1^s = [0\ 0]^T$ (gepunktet), $i_2^s = [i_N\ 0]^T$ (gestrichelt) und $i_3^s = [3i_N\ 0]^T$ (voll) am Beispiel der gleichen, stark sättigenden PMSM aufgetragen, wobei die Punkte wieder äquidistante Rotorlageschritte markieren. Die Sterne markieren den jeweiligen q-Achsen- (jeweils mittiger Punkt des linierten Abschnitts) bzw. MTPA-Strombetriebspunkt (jeweils tiefster Punkt der Trajektorie). Die herauslaufenden Geradenstücke markieren nochmals die jeweilige AF-Annahme der Flussverlaufs unter 10°-Rotordrehung, die insbesondere bei hohen Strömen nicht zutrifft. Der linierte Abschnitt einer jeden geschlossenen SFC-Trajektorien markiert jeweils den Bereich mit negativer Rotorlage $\theta_r$ = -180° ...0°, d.h. positivem Stromwinkel in Rotorkoordinaten $\theta_{ir}$ = 0° ... 180°,

$$\theta_{ir} = \angle i_s^r = \theta_i - \theta_r, \tag{18}$$

d.h. mit positivem Drehmoment $i_s^{r^T} J \psi_s^r > 0$. Aufgrund der magnetischen Symmetrie einer PMSM kann der jeweils nicht linierte Abschnitt einer jeden SFC-Trajektorie (mit x-Punkten) vollständig mittels Spiegelung um die d-Achse aus dem zugehörigen linierten Abschnitt berechnet werden. Durch diese Spiegelung reduziert sich der Datenbedarf um Faktor 2, jedoch gelten diese Trajektorien in Statorkoordinaten $\psi_x^s(\theta_r)$ nur, wenn der Strom $i_s^s$ genau auf der α-Achse liegt. Für andere Stromwinkel in Statorkoordinaten $\theta_i = \angle i_s^s \neq 0$ müssten entsprechend weitere SFC-Trajektorien $\psi_x^s(\theta_r)$ hinterlegt/berechnet werden.

Deshalb wird als besonders vorteilhafte Beschreibung der SFC-Verläufe ihre Darstellung in Stromkoordinaten $\psi_s^i = [\psi_x\ \psi_y]^T$ eingeführt, welche sich durch Transformation mit dem Stromwinkel $\theta_i = \angle i_s^s$ ergibt

$$\psi_s^i = T(-\theta_i)\psi_s^s \tag{19}$$

Unter Vernachlässigung von höheren Fluss-Harmonischen (für viele Synchronmaschinen hinreichend gut zutreffend) gilt hier

$$\psi_s^i(|i_s^s|, \theta_{ri}) = \psi_s^s\left(\begin{bmatrix} |i_s^s| \\ 0 \end{bmatrix}, \theta_r\right) \qquad (20)$$

sodass die Kurven in Fig. 6 ebenfalls drei SFC-Flussverläufe in Stromkoordinaten $\psi_1^i(\theta_{ri}), \psi_2^i(\theta_{ri})$ und $\psi_3^i(\theta_{ri})$ über veränderlichem Rotorwinkel in Stromkoordinaten

$$\theta_{ri} = \theta_r - \theta_i = \theta_r - \angle i_s^s \qquad (21)$$

$$= -\theta_{ir} = -\angle i_s^r \qquad (22)$$

darstellen, die für die drei Strombeträge Null $|i_s^s|_1 = 0$, Nennstrom $|i_s^s|_2 = i_N$ oder 3-fach Nennstrom $|i_s^s|_3 = 3i_N$ und dabei für alle Stromwinkel $\theta_i = \angle i_s^s = -180° \dots 180°$ gelten. Durch letzteres ist der Datenbedarf gegenüber einer Beschreibung in Statorkoordinaten um ein vielfaches reduziert.

Alternativ zu (20) lässt sich die Beschreibung der SFC-Verläufe in Stromkoordinaten $\psi_s^i(|i_s^s|, \theta_{ri})$ auch wie folgt aus einer herkömmlichen rotorfesten Flusskarte $\psi_s^r(i_s^r)$ ableiten

$$\psi_s^i(|i_s^s|, \theta_{ri}) = T(\theta_{ri})\psi_s^r\left(T(-\theta_{ri})\begin{bmatrix} |i_s^s| \\ 0 \end{bmatrix}\right) \qquad (23)$$

deren Bestimmung/Messung im Fachbereich hinreichend bekannt ist.

Zur Rotorlagezuordnung wird nun generell nach dem Winkelwert $\hat{\theta}_{ri}$ gesucht, der das Modell (23) in bestmögliche Übereinstimmung mit dem nach (19) gewonnen Fluss-Messwert $\hat{\psi}_s^i$ bringt

$$\min_{\theta_{ri}}\left|T(-\angle i_s^s)\hat{\psi}_s^s - \psi_s^i(|i_s^s|, \theta_{ri})\right|. \qquad (24)$$

Der gefundene Winkelwert $\hat{\theta}_{ri}$ repräsentiert gemäß (21) die Differenz zwischen Rotorlage und Stromwinkel $\angle i_s^s$, weshalb nach der Suche (24) die Rotorlage wie folgt zugeordnet wird

$$\hat{\theta}_r = \angle i_s^s + \hat{\theta}_{ri}. \qquad (25)$$

Wichtig hierbei ist, dass die Gesamtheit aller zur Rotorlagezuordnung genutzten Gleichungen (24)-(25) lediglich den gemessenen (per Flussschätzer) Flussvektor in Statorkoordinaten $\hat{\psi}_s^s$ und den gemessenen Stromvektor in Statorkoordinaten $i_s^s$ als Eingangsgrößen brauchen, dabei den vollständigen Informationsgehalt des Stromvektors $i_s^s$ nutzen (Strombetrag $|i_s^s|$ und -winkel $\angle i_s^s$) und auf eine Rückführung der geschätzten Rotorlage $\hat{\theta}_r$ verzichten. Dies steht im Kontrast zu den Eigenschaften herkömmlicher Grundwellenverfahren (siehe Abschnitt 1). Lösungsumsetzung

Die mittels (20) oder (23) oder anders gewonnene Funktion des Fluss in Stromkoordinaten $\psi_s^i(|i_s^s|, \theta_{ri})$ wird beispielsweise in einer zweidimensionalen Tabelle (LUT, für englisch lookup table) in einer Dimension über dem Strombetrag $|i_s^s|$ und in der anderen Dimension über dem Rotorwinkel in Stromkoordinaten $\theta_{ri}$ abgelegt. Einer jeden solchen Stützstellenkombination ist dann jeweils ein Wert des Flussvektors $\psi_s^i$ zugeordnert. Ausgehend von diesen hinterlegten Modelldaten wird in den folgenden fünf Schritten einem gemessenen Flusswert $\hat{\psi}_s^s$ (Ausgang des Flussschätzers) in Verbindung mit dem gemessenen Stromwert $i_s^s$ der berechnete Rotorlagewert $\hat{\theta}_r$ zugeordnet.

Im ersten Schritt wird der Winkel des gemessenen Stroms berechnet

$$\theta_i = arg(i_s^s) \qquad\qquad (26)$$

und damit der gemessene Flusswert $\hat{\psi}_s^s$ gemäß (19) nach Stromkoordinaten transformiert $\hat{\psi}_s^i$.

Unabhängig davon wird im zweiten Schritt der Betrag des gemessenen Stroms $|i_s^s|$ berechnet und mit diesem aus der hinterlegten LUT das aktuell gültige SFC-Trajektorien-Paar ausgewählt und dazwischen interpoliert, was in Fig. 7 veranschaulicht ist. Dort liegt Strombetrag beispielsweise zwischen den Stützstellen $|i_s^s|_1$ und $|i_s^s|_2$ wodurch aus den Daten der LUT die zwei umliegenden SFC-Flussverläufe $\psi_1^i(\theta_{ri})$ und $\psi_2^i(\theta_{ri})$ ausgewählt werden. Die gestrichpunktete Kurve zeigt das Interpolationsergebnis, wie es sich ergibt, wenn der gemessene Strombetrag $|i_s^s|$ etwa mittig zwischen den Stromstützstellen $|i_s^s|_1$ und $|i_s^s|_2$ der LUT liegt. Entweder wird in diesem Schritt der komplette Verlauf interpoliert (gesamte gestrichpunktete Kurve) oder alternativ (aus Gründen der Rechenzeit- und Speichereffizienz) nur die Stromstützstelle gesucht und das Interpolationsverhältnis (im dargestellten Beispiel ca. 0,5) berechnet. In letzterem Fall, von dem nun beispielhaft ausgegangen wird, werden im dritten Schritt immer nur die Punkte interpoliert, die auch tatsächlich gebraucht werden - was abhängig vom Suchverfahren und Betriebspunkt durchaus ein nur sehr kleiner Ausschnitt der gestrichpunktete Kurve sein kann.

Der nächste, dritte Schritt ist die Winkel-Stützstellensuche, die in Fig. 8 dargestellt ist. Das Ziel dieses Schritts ist es, das Stützstellenpaar der interpolierten Trajektorie mit dem kleinsten Abstand zum gemessenen Flussvektor $\hat{\psi}_s^i$ zu finden. Hierzu können entweder alle Abstände zu allen Punkten des interpolierten SFC-Verlaufs ermittelt werden (globale Suche), oder es kann alternativ so lang in absteigender Richtung voran geschritten werden, bis der Abstand nicht mehr kleiner wird (Gradientensuche). Ersteres ist rechenaufwändiger als letzteres, aber findet garantiert den nächsten Punkt (globales Optimum), der allerdings insbesondere bei SFC-Verläufen mit Überschneidungspunkten nicht unbedingt richtig sein muss - d.h. hier kann die Gradientensuche durchaus technisch vorteilhaft sein.

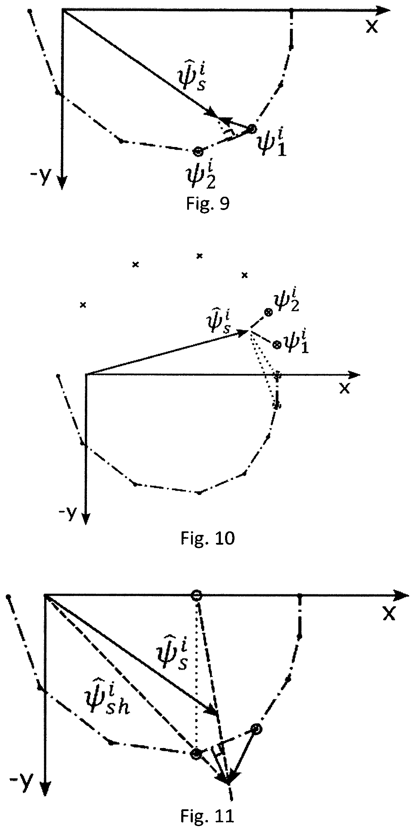

Nachdem im dritten Schritt das nächstliegende Winkel-Stützstellen-Paar gewählt wurde, kann nun im vierten Schritt der genaue Winkelwert $\theta_{ri}$ interpoliert werden. Hierfür wird beispielhaft angenommen, dass die beiden nächstliegenden Punkte in Fig. 9 den Stützstellen $\theta_{ri1}$ = -60° (rechter Punkt) und $\theta_{ri2}$ = -90° (linker Punkt) zugeordnet sind. Es werden nun Differenzvektoren vom ersten Stützstellenpunkt $\psi_1^i$ zum zweiten Stützstellenpunkt $\psi_2^i$ und zum gemesssen Fluss $\hat{\psi}_s^i$ berechnet

$$\Delta\psi_{LUT}^i = \psi_2^i - \psi_1^i \qquad\qquad (27)$$

$$\Delta\psi_{meas}^i = \hat{\psi}_s^i - \psi_1^i \qquad\qquad (28)$$

und mittels der folgenden Projektionsgleichung der Verhältniswert $v_\theta$ ermittelt, zu dem der zweite Stützstellenwert gegenüber dem ersten gewichtet werden soll

$$v_\theta = \frac{{\Delta\psi_{meas}^i}^T \, \Delta\psi_{LUT}^i}{{\Delta\psi_{LUT}^i}^T \, \Delta\psi_{LUT}^i} \qquad\qquad (29)$$

wobei die Multiplikation eines transponierten Spaltenvektors mit einem Spaltenvektor einem Skalarprodukt gleicht. Im Beispiel von Fig. 9 wäre dieses Verhältnis $v_\theta$ = 0,4 womit nun im fünften und letzten Schritt wie folgt ein Winkelwert zugewiesen wird:

Die Winkel-Stützstellenwerte $\theta_{ri}$ und $\theta_{ri2}$ werden mit $v_\theta$ zueinander gewichtet um den Rotorwinkel in Stromkoordinaten $\theta_{ri}$ zu berechnen

$$\hat{\theta}_{ri} = \theta_{ri1} + v_\theta(\theta_{ri2} - \theta_{ri1}) \qquad (30)$$

welcher (im Beispiel von Fig. 9 folglich $\hat{\theta}_{ri}$= -72° ) dann auf den bereits zuvor in (26) berechneten Stromwinkel addiert wird, um die berechnete Rotorlage zu erhalten

$$\hat{\theta}_r = \theta_i + \hat{\theta}_{ri}. \qquad (31)$$

Weil jeder dieser Schritte auf eindeutigen Messgrößen beruht ( $|i_s^s|$ , $|\theta_i|$ und/oder $\psi_s^s$ ), und keine Annahmen hinsichtlich Rotorlage oder Strombetriebspunkt enthält, ist diese Rotorlage-Zuordnungsvorschrift vollständig geradlinig, allgemein stabil und in allen Strombetriebspunkten, d.h. auch abseits der Sollstromtrajektorie (z.B. MTPA) genau, was u.a. im Feldschwächbereich vorteilhaft gegenüber Verfahren der Literatur sein kann.

Wie in Fig. 7 bis Fig. 9 gezeigt, brauchen nur SFC-Flussverläufe in der LUT hinterlegt werden, die für die Hälfte der möglichen/relevanten Rotorwinkel in Stromkoordinaten $\theta_{ri}$ = [-180° ...0°] gelten, weil für den übrigen Winkelbereich $\theta_{ri}$ = [0° ... 180°] die SFC-Flussverläufe symmetrisch verlaufen (vgl. Fig. 6) und damit aus den hinterlegten Daten wie folgt konstruiert werden können:

Die Spiegelung erfolgt ausschließlich im obigen dritten Schritt, d.h. in der Winkel-Stützstellensuche; alle anderen Schritte bleiben unbeeinflusst. Fig. 10 zeigt ein Beispiel, wo ein Flusswert in Stromkoordinaten $\hat{\psi}_s^i$ mit positiver y-Komponente gemessen wurde. In diesem Fall wird die Winkel-Stützstellensuche den Abstand reduzieren, in dem sie nach rechts oben, d.h. zu kleineren Winkel $\theta_{ri}$ voranschreitet, bis sie schließlich beim Stützstellenindex 0 an der x-Achse am Ende der hinterlegten Stützstellen ankommt. Von dort an wird die Suche auch in den Bereich negativer Indizes fortgesetzt, wobei mittels folgender Symmetrie-Regeln eine Spiegelung umgesetzt wird:

1. negative Index-Werte werden zur Adressierung der LUT in positive Werte übersetzt: z.B. -1→+1
2. der zugehörige x-Flussanteil $\psi_x$ der Stützstelle wird direkt verwendet: z.B. +0.3Vs→+0.3Vs
3. der zugehörige y-Flussanteil $\psi_y$ der Stützstelle wird negiert: z.B. -0.1Vs→+0.1Vs
4. der zugehörige Winkelwert $\theta_{ri}$ der Stützstelle wird negiert: z.B. -30°→+30°

Auf diese Weise wird, wie in Fig. 10 dargestellt, auf der virtuellen, durch Kreuze angedeuteten Trajektorie weiter nach dem nächstliegenden Stützstellenpaar gesucht und dabei die Indizes -2 und -1 mit den Winkelwerten $\theta_{ri1}$ = +60° (oberes umkreistes Kreuz) und $\theta_{ri2}$ = +30° (unteres umkreistes Kreuz) gefunden. Dieses Paar mit den zugehörigen (gespiegelten) Flusswerten $\psi_{s1}^i$ und $\psi_{s2}^i$ bilden dann den Ausgangspunkt für den obigen vierten Schritt, der Interpolation des Winkelwerts $\hat{\theta}_{ri}$, die ungeachtet der erfolgten Spiegelung identisch zu ihrer obigen Beschreibung erfolgt.

Bei Synchronmaschinentypen ohne Permanent-Fluss (z.B. RSM) ist das Symmetrieintervall auf $\theta_{ri}$ = [-90° ...0°] verkürzt. Generell gilt, dass unabhängig von der Länge des Symmetrieintervalls nur die Daten dieses Intervalls selbst hinterlegt werden brauchen und im Betrieb außerhalb mit den gleichen, oben beschriebenen Regeln gespiegelt werden kann.

## 4 Temperaturkompensation

Weil unter Temperaturerhöhung des Rotors der PM-Fluss reversibel abnimmt (abhängig vom PM-Material bis 10-20%), ändern sich (z.B. bei PMSM) auch die für die Lagezuordnung wichtigen magnetischen Zusammenhänge. Dieser Abschnitt erläutert, wie eine entsprechende Kompensationsvorschrift möglich ist. Dabei ist besonders vorteilhaft, dass dieser Kompensationsansatz ohne Messdaten von einer heißen Maschine auskommt, weil das Aufheizen der Maschine einen besonders anspruchsvollen, langwierigen und nicht immer möglichen Prozessteil der geberlos-Inbetriebnahme darstellt.

Als Ansatzpunkt für eine Kompensation ohne heiße Daten wird der Kollaps der SFC-Flussverläufe in Stromkoordinaten herangezogen, welcher sich in diesen Koordinaten besonders einfach gestaltet (z.B. im Vergleich zur deutlich komplexeren temperaturbedingten Veränderung herkömmlicher Flusskarten).

Die Grundidee zur möglichst einfachen Modellierung des Temperaturverhaltens zur Ermöglichung einer Kompensationsvorschrift ist die Annahme, dass das Kollaps-Zentrum näherungsweise durch einen Punkt auf der x-Achse beschrieben werden kann, dessen x-Komponente der des q-Achsen-Betriebspunktes (jeweils rechter Stern einer jeden Trajektorie in Fig. 6) gleicht.

$$\psi_{clps}^i = \begin{bmatrix} \psi_x(|i_s^s|, 90°) \\ 0 \end{bmatrix} \qquad (32)$$

Unter Temperaturveränderung erfolgt also eine Verschiebung eines jeden hinterlegten Flusspunktes auf der durch ihn und das Kollapszentrum (32) beschriebenen Geraden. Diese Verschiebung kann proportional zur Änderung des PM-Fluss erfolgen.

Bei manchen PM-Maschinen kann vereinfacht beispielhaft angenommen werden, dass der Grad des Kollaps $v_{clps}$ mit dem aktuellen Wert des PM-Fluss $\psi_{PM}$ skaliert

$$\psi_{sh}^i = \psi_{clps}^i + v_{clps}\left(\psi_s^i - \psi_{clps}^i\right) \qquad (33)$$

$$v_{clps} = \frac{\psi_{PM}}{\psi_{PM0}} \qquad (34)$$

worin $\psi_{PM0}$ der PM-Flusswert ist, bei dem die hinterlegten SFC-Verläufe gemessen wurden, und $\psi_{sh}^i$ den Temperatur-kompensierten Wert des hinterlegten Modellwerts $\psi_s^i$ darstellt, der entsprechend in die Gleichungen (24) bzw. (27)-(28) zur Lagezuordnung eingeht. Auf dieser Basis kann ein nachgeführter PM-Fluss-Wert $\psi_{PMtrk}$ (sofern durch andere Verfahren vorhanden) anstelle von $\psi_{PM}$ in (34) dazu genutzt werden, den aktuellen Kollaps-Grad $v_{clps}$ zu berechnen und damit eine Temperaturkompensation der Lagezuordnung mittels (33) zu ermöglichen.

Alternativ zur Skalierung der Modell-SFC-Verlaufspunkte, kann auch der gemessene Flusswert $\hat{\psi}_s^i$ invers skaliert werden

$$\hat{\psi}_{sh}^i = \psi_{clps}^i + v_{clps}^{-1}\left(\hat{\psi}_s^i - \psi_{clps}^i\right), \qquad (35)$$

was in der Lagezuordnung nach (24)-(25) bzw. (27)-(31) zu einem identischen Ergebnis $\hat{\theta}_r$ führt, wie eine Anpassung der Modell-SFC-Verlaufspunkte, jedoch deutlich weniger Rechenaufwand erfordert. Auch diese inverse Skalierung des gemessenen Flusswerts ist auf Basis eines nachgeführten PM-Flusswerts $\psi_{PMtrk}$ möglich.

Alternativ zu $\psi_{PMtrk}$ kann auch eine andere Informationsquelle zur Bestimmung des Skalierungsfaktor $v_{clps}$ genutzt werden: die zur Lageinformation orthogonale Komponente, welche definitionsgemäß frei von Lageinformation ist, während in dieser Richtung der Kollaps hauptsächlich stattfindet. Die orthogonale Komponente ist in Fig. 11 durch die kurze Linie dargestellt (die senkrecht auf dem SFC-Verlauf steht) und ergibt sich mathematisch, wenn in (29) mit dem skalierten Messwert $\hat{\psi}_{sh}^i$

$$\Delta\psi_{meash}^i = \hat{\psi}_{sh}^i - \psi_{s1}^i \qquad (36)$$

und anstatt des Skalarprodukts mit einem Kreuzprodukt gearbeitet wird

$$e_h = \frac{\Delta\psi_{meash}^{i\,T} J\, \Delta\psi_{LUT}^i}{\Delta\psi_{LUT}^{i\,T} \Delta\psi_{LUT}^i} \qquad (37)$$

Sollte der skalierte Messvektor $\widehat{\psi}_{sh}^l$ außerhalb der interpolierten Trajektorie sein, ist $e_h$ positiv und der Skalierungsfaktor $v_{clps}$ oder alternativ der PM-Nachführwert $\psi_{PMtrk}$ muss erhöht werden - und umgekehrt. Daraus lässt sich folgendes Gesetz zur Anpassung des Skalierungsfaktors $v_{clps}$ selbst oder alternativ zur PM-Fluss-Nachführung ableiten

$$\frac{dv_{clps}}{dt} = k_v e_h \qquad\qquad (38)$$

$$\frac{d\psi_{PMtrk}}{dt} = k_{trkPM} e_h \qquad\qquad (39)$$

wo mit den Verstärkungswerten $k_v$ bzw. $k_{trkPM}$ die jeweilige Nachführbandbreite eingestellt werden kann.

**5 Experimentelle Ergebnisse**

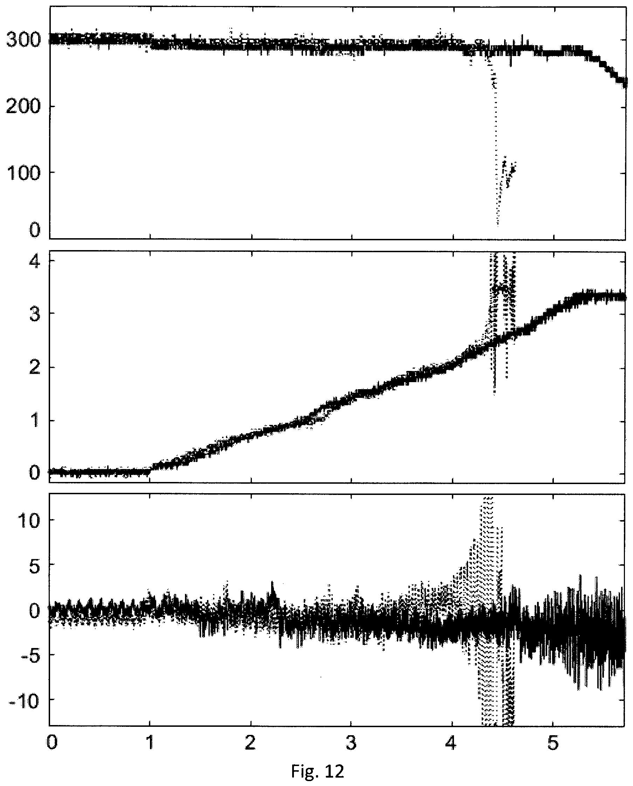

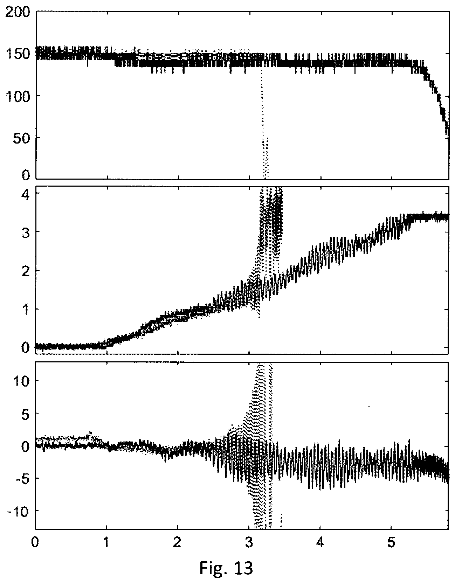

Die nachfolgenden Messergebnisse wurden mit der gleichen PMSM und RSM gewonnen, die auch für die Herleitung verwendet wurden. Dabei zeigt Fig. 12 die Ergebnisse des vorgestellten Verfahrens (voll) und des ActiveFlux-Verfahrens (gepunktet) für die PMSM und Fig. 13 die Ergebnisse des vorgestellten Verfahrens (voll) und des FundamentalSaliency-Verfahrens (gepunktet) für die RSM.

Beide Maschinen befinden sich in geberloser Drehzahlregelung, d.h. die Lageschätzung wird zur Park-Transformation der Stromregelung und zeitlich abgeleitet zur Drehzahlrückführung verwendet. Ein angeschlossener Geber dient ausschließlich zur Berechnung des Schätzfehlers und zur Darstellung der tatsächlichen Drehzahl in Fig. 12 und Fig. 13 jeweils oben. Der Drehzahlsollwert liegt mit $300\frac{rad}{s}$ für die PMSM und $150\frac{rad}{s}$ für die RSM jeweils in einem Bereich, wo die Lageschätzung ausschließlich auf Basis des Grundwellenverfahrens erfolgt. Für die erste Sekunde einer jeden Messung drehen die Maschinen im Leerlauf. Danach wird durch eine Lastmaschine ein steigendes Lastmoment eingeprägt, das nach etwa 5 Sekunden bei beiden Maschinen dazu führt, dass eingestellte Strombeschränkung von ca. 3,4-fach Nennstrom erreicht wird. Weil sich das Lastmoment dennoch weiter erhöht, sinkt die Drehzahl am Ende folglich ab.

Bei der PMSM bleiben die Schätzfehler beider Verfahren bis etwa $t \leq 4s$ und $|i_s^s| \leq 2i_N$ unterhalb 3 elektrischer Grad. Danach entwickelt sich beim ActiveFlux-Verfahren eine aufklingende Schwingung und das Verfahren kippt in den Bereich negativer Schätzfehler weg (vgl. Fig. 4). Aufgrund der Schätzfehler und dem folglich falschen Stromwinkel erzeugt der Strombetrag weniger Drehmoment. Dadurch fällt beim ActiveFlux-Verfahren die Drehzahl ab, worauf der Drehzahlregler mit einem rasch aufklingenden Strombetrag antwortet, welcher aber aufgrund des falschen Stromwinkels dem Lastmoment auch nicht mehr entgegenwirken kann. Das vorgestellte Verfahren mit eindeutiger Fluss-Rotorlage-Zuordnung behält hingegen auch darüber hinaus geringe Schätzfehler, kippt nicht weg und kann dadurch bis zum Erreichen der Strombegrenzung von 3,4$i_N$ dem anwachsenden Lastmoment entgegenwirken und die Solldrehzahl aufrecht erhalten.

Bei der RSM bleiben die Schätzfehler lediglich bis etwa $t \leq 2,5s$ und $|i_s^s| \leq i_N$ unterhalb 3 elektrischer Grad. Danach entwickelt sich auch beim FundamentalSaliency-Verfahren eine aufklingende Schwingung und das Verfahren kippt ebenfalls in den Bereich negativer Schätzfehler weg (vgl. Fig. 5). Auch hier fällt wegen der resultierenden Drehmomentreduktion die Drehzahl ab und der Strombetrag klingt durch den Drehzahlregler rasch auf, ohne die Drehzahl zu beeinflussen. Das vorgestellte Verfahren mit eindeutiger Fluss-Rotorlage-Zuordnung behält auch hier wieder weiterhin geringe Schätzfehler (diesmal mit ausgeprägteren Harmonischen von etwa 2-3 elektrischen Grad), kippt nicht weg und kann dadurch bis zum Erreichen der Strombegrenzung von 3,4$i_N$ dem anwachsenden Lastmoment entgegenwirken und die Solldrehzahl aufrecht erhalten.

In Summe zeigt sich das vorgestellte Verfahren mit eindeutiger Fluss-Rotorlage-Zuordnung im Unterschied zu herkömmlichen Grundwellenverfahren als allgemein stabil und in der Lage, auch bei stark nichtlinearen Maschinen hohe Überlasten geberlos zu regeln.

Weitere Aspekte betreffen:

(i) Eine Vorrichtung zur Steuerung und Regelung einer Drehfeldmaschine, umfassend einen Stator und einen Rotor, mit einem mit einer Einrichtung zur Erfassung einer Anzahl von Phasenströmen und mit einem Controller zur Ansteuerung des PWM-Umrichters, der zur Durchführung des Verfahrens wie oben beschrieben eingerichtet und ausgebildet ist; und eine

(ii) Synchronmaschine, umfassend einen Stator und einen Rotor mit oder ohne Permanentmagnete mit einer Vorrichtung zur Steuerung und/oder Regelung wie in Punkt (i) beschrieben

Literaturverzeichnis

[1] R. Wu und G. R. Slemon, "A permanent magnet motor drive without a shaft sensor," IEEE Transactions on Industry Applications, pp. 1005-1011, 09 1991.

[2] T. Furuhashi, S. Sangwongwanich und S. Okuma, "A position-and-velocity sensorless control for brushless DC motors using an adaptive sliding mode observer," IEEE Transactions on Industrial Electronics, pp. 89-95, 04 1992.

[3] S. Bolognani, R. Oboe und M. Zigliotto, "Sensorless full-digital PMSM drive with EKF estimation of speed and rotor position," IEEE Transactions on Industrial Electronics, pp. 184-191, 02 1997.

[4] T. Endou, H. Fujii, H. Miura, K. Sakamoto und N. Takahashi, "Method of estimating a rotor position of synchronous motor, method of controlling synchronous motor with no position sensor and a controller of synchronous motor". EP Patent EP1133050B1, 06 03 2000.

[5] E. Y. Y. Ho, "Rotor angle estimation for permanent magnet synchronous motor drive". US Patent US6910389B2, 12 11 2001.

[6] Z. Chen, M. Tomita, S. Doki und S. Okuma, "An extended electromotive force model for sensorless control of interior permanent-magnet synchronous motors," IEEE Transactions on Industrial Electronics, pp. 288-295, 04 2003.

[7] S. Ichikawa, M. Tomita, S. Doki und S. Okuma, "Sensorless Control of Synchronous Reluctance Motors Based on Extended EMF Models Considering Magnetic Saturation With Online Parameter Identification," IEEE Transactions on Industry Applications, pp. 1264-1274, 09 2006.

[8] L. Cardoletti, T. Bieler, C. Koechli und C. Fleury, "Sensorless technology, estimation of sampled back EMF voltage values and/or the sampled inductance values based on the pulse width modulation periods". EP Patent EP2036197B1, 05 07 2006.

[9] I. Boldea, M. C. Paicu und G. Andreescu, "Active Flux Concept for Motion-Sensorless Unified AC Drives," IEEE Trans, on Power Electronics, vol. 23, pp. 2612-2612, 2008.

[10] A. Eilenberger und M. Schroedl, "Extended back EMF model for PM synchronous machines with different inductances in d- and q-axis," in 13th International Power Electronics and Motion Control Conference, Poznan, 2008.

[11] P. Landsmann, R. Kennel, H. W. de Kock und M. J. Kamper, "Fundamental saliency based encoderless control for reluctance synchronous machines," pp. 1-7, IEEE Conf. ICEM 2010.

[12] M. Veijanen, "Method and apparatus for estimating rotor angle of synchronous reluctance motor". EP Patent EP2493067B1, 22 2 2011.

[13] M. Schrödl, "Detection of the rotor position of a permanent magnet synchronous machine at standstill," IEEE Conf. ICEM, p. 51-56, 1988.

[14] P. L. Jansen und R. D. Lorenz, "Transducerless position and velocity estimation in induction and salient ac machines," IEEE Trans. on Industrial Applications, vol. 31, p. 240-247, 1995.

[15] P. Landsmann.DE, EP, WO Patent DE102015217986A1, 2015.

[16] M. J. Corley und R. D. Lorenz, "Rotor position and velocity estimation for a salient-pole permanent magnet synchronous machine at standstill and high speeds," IEEE Trans. on Industrial Applications, vol. 34, p. 784-789, 1998.

[17] A. Piippo, "Method in salient-pole permanent magnet synchronous machine". EP Patent EP1513250B1, 05 09 2003.

[18] J. Quirion, "Position sensorless drive for permanent magnet synchronous motors". US Patent US7026772B2, 14 01 2004.

[19] M. Schroedl, M. Hofer und W. Staffler, "Combining INFORM method, voltage model and mechanical observer for sensorless control of PM synchronous motors in the whole speed range including standstill," W. Elektrotech. Inftech., p. 183-19, 05 2006.

[20] F. Götz und V. Barinberg, "System zur nahtlosen Geschwindigkeits- und/oder Lageermittlung einschließlich Stillstand bei einem Permanentmagnet-Läufer einer elektrischen Maschine". EP Patent EP2023479B1, 06 08 2007.

[21] W. Hammel, M. Hartmann und H. Wolf, "Verfahren zur Bestimmung der Rotorlage einer feldorientiert betriebenen Synchronmaschine". EP Patent EP2474091B1, 02 09 2009.

[22] S. Agarlita, I. Boldea und B. F., "High-Frequency-Injection-Assisted "Active-Flux"-Based Sensorless Vector Control of Reluctance Synchronous Motors, With Experiments From Zero Speed," IEEE Transactions on Industry Applications, pp. 1931-1939, 11 2012.

[23] F. Demmelmayr, M. Susic und M. Schroedl, "Sensorless control at high starting torque of a 4000 Nm traction drive with permanent magnet synchronous machine," in 14th European Conference on Power Electronics and Applications, Birmingham, 2011.

[24] S. Shinnaka, "Vector control method for synchronous reluctance motor". US Patent US6339308B2, 17 03 2000.

[25] W. Hammel, P. Landsmann und R. M. Kennel, "Operating point dependent anisotropies and assessment for position-sensorless control," in EPE/ECCE Europe, Karlsruhe, 2016.

[26] R. Joetten und G. Maeder, "Control Methods for Good Dynamic Performance Induction Motor Drives Based on Current and Voltage as Measured Quantities," IEEE Transactions on Industry Applications, Bde. %1 von %2IA-19, Nr. 3, pp. 356-363, 1983.

**Patentansprüche**

1. Verfahren zur Zuordnung der Flussverkettung zur Rotorlage einer Synchronmaschine, umfassend einen Stator und einen Rotor mit oder ohne Permanentmagnete, wobei die Synchronmaschine über getaktete Klemmspannungen angesteuert und aus diesen und der gemessenen Stromantwort die magnetische Flussverkettung berechnet wird, **dadurch gekennzeichnet,**
dass der Verlauf der Flussverkettung über der Rotordrehung unter der Randbedingung eines in Statorkoordinaten unveränderten, mindestens zweidimensionalen Stromvektors als Schlüsselinformation zur Zuordnung der Flussverkettung zur Rotorlage verwendet wird, und dass mehrere Verläufe der Flussverkettung über der Rotordrehung für jeweils verschiedene statorfeste Stromwerte in einem Modell hinterlegt sind, woraus im Betrieb gemäß der Strommessung ein aktuell gültiger Verlauf ausgewählt oder berechnet wird, mittels welchem dann der aktuell berechneten Flussverkettung ein Rotorlagewert zugeordnet wird.

2. Verfahren nach Anspruch 1,
**dadurch gekennzeichnet, dass** zur Berechnung der Rotorlage ausschließlich die gemessene Flussverkettung und der gemessen Stromvektor in Statorkoordinaten und die hinterlegten Verläufe der Flussverkettung herangezogen werden und dass die geschätzte Rotorlage weder direkt noch indirekt zur Rotorlage-Zuordnung rückgeführt wird.

3. Verfahren nach einem der vorhergehenden Ansprüche,
**dadurch gekennzeichnet, dass** die gemessene Flussverkettung vom statorfesten Koordinatensystem in ein Koordinatensystem transformiert wird, das mit dem Stromwinkel ausgerichtet ist.

**4.** Verfahren nach einem der vorhergehenden Ansprüche,
**dadurch gekennzeichnet, dass** für einen Stromwert der Verlauf der Flussverkettung über einer ganzen elektrischen Rotordrehung hinterlegt ist oder über einem kürzeren Intervall, das es erlaubt, durch Symmetriebedingungen den Verlauf über einer ganzen elektrischen Rotordrehung zu berechnen.

**5.** Verfahren nach einem der vorhergehenden Ansprüche,
**dadurch gekennzeichnet, dass** für die Zuordnung der Flussverkettung zur Rotorlage ein Punktepaar aus dem hinterlegten Verlauf der Flussverkettung bestimmt wird, das den geringsten Abstand zur gemessenen Flussverkettung aufweist.

**6.** Verfahren nach Anspruch 5,
**dadurch gekennzeichnet, dass** der zugeordnete Rotorlagewert sich aus der gewichteten Summe der Lagewerte des nächsten hinterlegten Punktepaars ergibt.

**7.** Verfahren nach Anspruch 6,
**dadurch gekennzeichnet, dass** die Gewichtung sich durch eine Projektion der gemessenen Flussverkettung auf diejenige Gerade ergibt, welche durch das nächste hinterlegte Punktepaar beschrieben ist.

**8.** Verfahren nach einem der vorhergehenden Ansprüche,
**dadurch gekennzeichnet, dass** der Einfluss eines Anstiegs der Rotortemperatur auf die Verläufe der Flussverkettung als Verschiebung eines jeden Verlaufspunktes auf einer Geraden modelliert wird, die durch den jeweiligen Verlaufspunkt und einen zweiten Punkt beschrieben ist, welcher den Abszissenwert des Punktes der Verlaufskurve mit Null d-Strom und den Ordinatenwert Null hat.

**9.** Verfahren nach Anspruch 8,
**dadurch gekennzeichnet, dass** zu einer Temperaturnachführung der Zuordnung der Flussverkettung zur Rotorlage die Verschiebung der Verlaufspunkte abhängig vom Kreuzprodukt aus zwei Differenzvektoren berechnet wird, wobei der erste Differenzvektor sich als Differenz zwischen der gemessenen Flussverkettung und einem der zwei nächstliegenden Verlaufspunkte und der zweite Differenzvektor sich als Differenz zwischen den zwei nächstliegenden Verlaufspunkten ergibt.

**10.** Vorrichtung zur Steuerung und Regelung einer Drehfeldmaschine, umfassend einen Stator und einen Rotor, mit einem steuerbaren PWM-Umrichter zur Ausgabe von getakteten Klemmspannungen, mit einer Einrichtung zur Erfassung einer Anzahl von Phasenströmen und mit einem Controller zur Ansteuerung des PWM-Umrichters, der zur Durchführung des Verfahrens nach einem der vorhergehenden Ansprüche eingerichtet und ausgebildet ist.

**11.** Synchronmaschine, umfassend einen Stator und einen Rotor mit oder ohne Permanentmagnete, mit einer Vorrichtung zur Steuerung und/oder Regelung nach Anspruch 10.

**Claims**

**1.** Method for assigning the flux linkage to the rotor position of a synchronous machine, comprising a stator and a rotor with or without permanent magnets, the synchronous machine being driven via clocked clamping voltages and the magnetic flux linkage being calculated from these and the measured current drive, **characterized in that** the course of the flux linkage over the rotor rotation under the boundary condition of an at least two-dimensional current vector unchanged in stator coordinates is used as key information for assigning the flux linkage to the rotor position, and **in that** a plurality of courses of the flux linkage over the rotor rotation for in each case different stator-fixed current values are stored in a model, from which a currently valid course is selected or calculated during operation in accordance with the current measurement, by means of which course a rotor position value is then assigned to the currently calculated flux linkage.

**2.** Method according to claim 1, **characterized in that** only the measured flux linkage and the measured current vector in stator co-ordinates and the stored progressions of the flux linkage are used to calculate the rotor position and that the estimated rotor position is neither directly nor indirectly fed back to the rotor position allocation.

**3.** Method according to one of the preceding claims, **characterized in that** the measured flux linkage is transformed from the stator-fixed coordinate system to a coordinate system aligned with the current angle.

4. Method according to one of the preceding claims, **characterized in that** for a current value the course of the flux linkage is stored over a whole electrical rotor revolution or over a shorter interval which allows the course over a whole electrical rotor revolution to be calculated by symmetry conditions.

5. Method according to one of the preceding claims, **characterized in that** for the assignment of the flux linkage to the rotor position, a pair of points is determined from the stored course of the flux linkage which has the smallest distance to the measured flux linkage.

6. Method according to claim 5, **characterized in that** the assigned rotor position value results from the weighted sum of the position values of the next deposited pair of points.

7. Method according to claim 6, **characterized in that** the weighting results from a projection of the measured flux linkage onto that straight line which is described by the next deposited pair of points.

8. Method according to one of the preceding claims, **characterized in that** the influence of an increase in rotor temperature on the flux linkage trajectories is modeled as a displacement of each trajectory point on a straight line described by the respective trajectory point and a second point having the abscissa value of the point of the trajectory curve with zero d-current and the ordinal value zero.

9. Method according to claim 8, **characterized in that** for temperature tracking of the assignment of the flux linkage to the rotor position, the displacement of the course points is calculated as a function of the cross product of two difference vectors, the first difference vector resulting as the difference between the measured flux linkage and one of the two closest course points and the second difference vector resulting as the difference between the two closest variation points.

10. Device for controlling and regulating a rotating field machine, comprising a stator and a rotor, having a controllable PWM converter for outputting clocked clamping voltages, having a device for detecting a number of phase currents, and having a controller for driving the PWM converter, which controller is arranged and designed to carry out the method according to one of the preceding claims.

11. Synchronous machine comprising a stator and a rotor with or without permanent magnets, with a device for control and/or regulation according to claim 10.


**Revendications**

1. Procédé pour associer l'enchaînement de flux à la position du rotor d'une machine synchrone, comprenant un stator et un rotor avec ou sans aimants permanents, la machine synchrone étant commandée par des tensions de serrage synchronisées et l'enchaînement de flux magnétique étant calculé à partir de celles-ci et de la quantité de courant mesurée,
   **caractérisé en ce que**
   l'évolution de l'enchaînement de flux sur la rotation du rotor sous la condition limite d'un vecteur de courant au moins bidimensionnel, inchangé dans les coordonnées du stator, est utilisée comme information clé pour l'affectation de l'enchaînement de flux à la position du rotor, et **en ce que** plusieurs évolutions de l'enchaînement de flux sur la rotation du rotor sont enregistrées dans un modèle pour respectivement différentes valeurs de courant statoriques, à partir desquelles, en fonctionnement, une évolution actuellement valable est sélectionnée ou calculée conformément à la mesure du courant, au moyen de laquelle une valeur de position du rotor est ensuite affectée à l'enchaînement de flux actuellement calculé.

2. Procédé selon la revendication 1, **caractérisé en ce que**, pour le calcul de la position du rotor, on utilise exclusivement l'enchaînement de flux mesuré et le vecteur de courant mesuré dans des co-données de stator et les courbes déposées de l'enchaînement de flux et **en ce que** la position estimée du rotor n'est pas ramenée directement ou indirectement à l'attribution de la position du rotor.

3. Procédé selon l'une des revendications précédentes, **caractérisé en ce que** l'enchaînement de flux mesuré est transformé du système de coordonnées fixe au stator en un système de coordonnées aligné avec l'angle de courant.

4. Procédé selon l'une des revendications précédentes, **caractérisé en ce que**, pour une valeur de courant, l'évolution de l'enchaînement des flux sur une rotation électrique complète du rotor est mémorisée ou sur un intervalle plus court qui permet de calculer, par des conditions de symétrie, l'évolution sur une rotation électrique complète du rotor.

5. Procédé selon l'une des revendications précédentes, **caractérisé en ce que**, pour l'affectation de l'enchaînement de flux à la position du rotor, on détermine une paire de points à partir de l'évolution enregistrée de l'enchaînement de flux, qui présente la distance la plus faible par rapport à l'enchaînement de flux mesuré.

6. Procédé selon la revendication 5, **caractérisé en ce que** la valeur de position du rotor attribuée résulte de la somme pondérée des valeurs de position de la paire de points suivante déposée.

7. Procédé selon la revendication 6, **caractérisé en ce que** la pondération résulte d'une projection de l'enchaînement de flux mesuré sur la droite décrite par la paire de points suivante déposée.

8. Procédé selon l'une des revendications précédentes, **caractérisé en ce que** l'influence d'une augmentation de la température du rotor sur les évolutions de l'enchaînement des flux est modélisée par le déplacement de chaque point de l'évolution sur une droite décrite par le point d'évolution correspondant et un deuxième point ayant l'abscisse du point de la courbe d'évolution à courant d nul et une valeur d'ordonnée nulle.

9. Procédé selon la revendication 8, **caractérisé en ce que**, pour un suivi de température de l'affectation de l'enchaînement de flux à la position du rotor, le déplacement des points de tracé est calculé en fonction du produit croisé de deux vecteurs de différence, le premier vecteur de différence étant la différence entre l'enchaînement de flux mesuré et l'un des deux points de tracé les plus proches et le deuxième vecteur de différence étant la différence entre les deux points de tracé les plus proches.

10. Dispositif de commande et de régulation d'une machine à champ tournant, comprenant un stator et un rotor, avec un convertisseur PWM commandable pour la sortie de tensions de serrage synchronisées, avec un dispositif de détection d'un nombre de courants de phase et avec un contrôleur pour la commande du convertisseur PWM, qui est conçu et réalisé pour la mise en oeuvre du procédé selon l'une des revendications précédentes.

11. Machine synchrone, comprenant un stator et un rotor avec ou sans aimants permanents, avec un dispositif de commande et/ou de régulation selon la revendication 10.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1133050 B1, T. Endou, H. Fujii, H. Miura, K. Sakamoto und N. Takahashi
- US 6910389 B2, E. Y. Y. Ho
- EP 2036197 B1, L. Cardoletti, T. Bieler, C. Koechli und C. Fleury
- EP 2493067 B1, M. Veijanen
- DE 102015217986 A1, P. Landsmann

- EP 1513250 B1, A. Piippo
- US 7026772 B2, J. Quirion
- EP 2023479 B1, F. Götz und V. Barinberg
- EP 2474091 B1, W. Hammel, M. Hartmann und H. Wolf
- US 6339308 B2, S. Shinnaka

**In der Beschreibung aufgeführte Nicht-Patentliteratur**

- Improved Nonlinear Flux Observer-Based Second-Order SOIFO for PMSM Sensorless Control. **WEI XU et al.** IEEE Transactions on Power Electronics. Institute of Electrical and Electronics Engineers, 01. Januar 2019, vol. 34, 565-579
- **R. WU ; G. R. SLEMON.** A permanent magnet motor drive without a shaft sensor. *IEEE Transactions on Industry Applications,* September 1991, 1005-1011
- **T. FURUHASHI ; S. SANGWONGWANICH ; S. OKUMA.** A position-and-velocity sensorless control for brushless DC motors using an adaptive sliding mode observer. *IEEE Transactions on Industrial Electronics,* April 1992, 89-95
- **S. BOLOGNANI ; R. OBOE ; M. ZIGLIOTTO.** Sensorless full-digital PMSM drive with EKF estimation of speed and rotor position. *IEEE Transactions on Industrial Electronics,* Februar 1997, 184-191
- **Z. CHEN ; M. TOMITA ; S. DOKI ; S. OKUMA.** An extended electromotive force model for sensorless control of interior permanent-magnet synchronous motors. *IEEE Transactions on Industrial Electronics,* April 2003, 288-295
- **S. ICHIKAWA ; M. TOMITA ; S. DOKI ; S. OKUMA.** Sensorless Control of Synchronous Reluctance Motors Based on Extended EMF Models Considering Magnetic Saturation With Online Parameter Identification. *IEEE Transactions on Industry Applications,* September 2006, 1264-1274
- **I. BOLDEA ; M. C. PAICU ; G. ANDREESCU.** Active Flux Concept for Motion-Sensorless Unified AC Drives. *IEEE Trans, on Power Electronics,* 2008, vol. 23, 2612-2612
- **A. EILENBERGER ; M. SCHROEDL.** Extended back EMF model for PM synchronous machines with different inductances in d- and q-axis. *13th International Power Electronics and Motion Control Conference, Poznan,* 2008

- **P. LANDSMANN ; R. KENNEL ; H. W. DE KOCK ; M. J. KAMPER.** Fundamental saliency based encoderless control for reluctance synchronous machines. *IEEE Conf. ICEM,* 2010, 1-7
- **M. SCHRÖDL.** Detection of the rotor position of a permanent magnet synchronous machine at standstill. *IEEE Conf. ICEM,* 1988, 51-56
- **P. L. JANSEN ; R. D. LORENZ.** Transducerless position and velocity estimation in induction and salient ac machines. *IEEE Trans. on Industrial Applications,* 1995, vol. 31, 240-247
- **M. J. CORLEY ; R. D. LORENZ.** Rotor position and velocity estimation for a salient-pole permanent magnet synchronous machine at standstill and high speeds. *IEEE Trans. on Industrial Applications,* 1998, vol. 34, 784-789
- **M. SCHROEDL ; M. HOFER ; W. STAFFLER.** Combining INFORM method, voltage model and mechanical observer for sensorless control of PM synchronous motors in the whole speed range including standstill. *W. Elektrotech. Inftech.,* Mai 2006, 183-19
- **S. AGARLITA ; I. BOLDEA ; B. F.** High-Frequency-Injection-Assisted ''Active-Flux''-Based Sensorless Vector Control of Reluctance Synchronous Motors, With Experiments From Zero Speed. *IEEE Transactions on Industry Applications,* November 2012, 1931-1939
- **F. DEMMELMAYR ; M. SUSIC ; M. SCHROEDL.** Sensorless control at high starting torque of a 4000 Nm traction drive with permanent magnet synchronous machine. *14th European Conference on Power Electronics and Applications, Birmingham,* 2011
- **W. HAMMEL ; P. LANDSMANN ; R. M. KENNEL.** Operating point dependent anisotropies and assessment for position-sensorless control. *EPE/ECCE Europe, Karlsruhe,* 2016

- **R. JOETTEN ; G. MAEDER.** Control Methods for Good Dynamic Performance Induction Motor Drives Based on Current and Voltage as Measured Quantities. *IEEE Transactions on Industry Applications,* 1983, vol. %1,%2IA-19 (3), 356-363